# EUROPEAN PATENT APPLICATION

(11) **EP 1 106 900 A1**
(43) Date of publication of application: **13.06.2001**
(21) Application number: 00204197.8
(22) Date of filing: 27.11.2000
(51) Int. Cl.: F16L 55/033

(54) **Vibration-isolating pipe clamp assembly**

(30) Priority: 30.11.1999 NL 1013700
(71) Applicant: J. van Walraven B.V., 3641 RK Mijdrecht (NL)
(72) Inventor: Van Walraven, Jan, 3641 GP Mijdrecht (NL)
(74) Representative: Brookhuis, Hendrik Jan Arnold

(57) **Abstract**

A vibration isolation member (10) to be arranged between a pipe (8) and a pipe clamp (2,3) for securing the pipe to a support. The vibration isolation member (10) has a body with a pipe side (12) which is to face towards the pipe (8) and a pipe-clamp side (14) which is to face towards the pipe clamp (2,3). The body is designed to extend around the pipe, the body of the vibration isolation member (10) comprising a layer of elastic material (13). This layer reduces the transmission of vibration from the pipe (8) to the pipe clamp (2,3).

On the pipe side, the body of the vibration isolation member comprises a load-distributing layer (12) for distributing mechanical loads and vibrations which are exerted by the pipe (8) over the layer of elastic material (13), which load-distributing layer (12) is more rigid than the layer of elastic material (13) and is attached to the said layer (13).

The body of the vibration isolation member preferably comprises, on the clamp side, an outer layer (14) which is more rigid than the layer of elastic material (13) and is attached to the said layer (13).

## Description

The present invention relates to a vibration isolation member which is designed to be arranged between a pipe and a pipe clamp for securing the pipe to a support. The present invention also relates to a pipe clamp assembly comprising a pipe clamp and a vibration isolation member accommodated therein.

Pipe clamp assemblies are known from the prior art in which the inner side of the annular metal clamp body is covered with a layer of elastic foam material, which layer of elastic foam material forms a vibration isolation member according to the preamble of claim 1. The function of the elastic foam material is to reduce the transmission of vibrations from the pipe to the clamp body and then to the support.

The same reduction in the transmission of vibrations between the pipe and the pipe clamp body is also sought with the use of vibration isolation members which are produced from a solid elastomeric rubber, which isolation members are known, for example, from EP 0 387 966 and from DE 297 12 588.

Tests have shown that the vibration isolation which is obtained from the known vibration isolation members is low and that in some cases scarcely any vibration isolation is achieved. This leads to vibrations in the pipe being transmitted via the pipe clamp to the support, for example the wall of a building. This wall can then act as an acoustic radiator and thus cause noise pollution.

The object of the present invention is to provide a vibration isolation member according to the preamble of claim 1 which provides improved vibration isolation.

To this end, the present invention provides a vibration isolation member according to the preamble of claim 1 which is characterized in that on the pipe side the body of the vibration isolation member comprises a load-distributing layer for distributing mechanical loads and vibrations which are exerted by the pipe over the layer of elastic material, which load-distributing layer is more rigid than the layer of elastic material and is attached to the layer of elastic material.

The vibration-isolating layer of elastic material is preferably relatively soft, elastically resilient and is made from a material which can be compressed so that the material volume is reduced.

The layer of elastic material may, for example, be a suitable plastics material, for example a (foamed) elastomeric rubber with an open or closed cell structure. It is also possible for a porous material to be used as the elastic material.

The load-distributing layer may, for example, be made from a solid plastic or metal.

The distribution of the loads exerted by the pipe, which include, inter alia, the weight of the pipe and of the medium present therein, and of the vibrations of the pipe over the entire circumference of the layer of vibration-isolating elastic material makes it possible for the said elastic material to be of soft and resilient design, which is of benefit to the vibration isolation.

Since the load-distributing layer is attached to the elastic material in a suitable way, preferably over the entire contact area, displacement of the load-distributing layer under the influence of static and dynamic mechanical loads exerted thereon and in particular of vibrations in the pipe leads to deformation of virtually the entire circumference of the layer of elastic material. On account of the load-distributing layer being attached to the elastic material, the material in question can act elastically not only as a result of compression of the material but also as a result of stretching of the material. Thus, in combination with the mass of the pipe and the contents of the pipe, the elastic layer forms a mass spring system. If the layer in question is made from elastic foam material with a closed cell structure, there is provision in particular for the walls of the cells of the foam material to be elastically deformed under the influence of the vibrations in the pipe.

Preferably, there is provision for the layer of elastic material to be attached to a more rigid component on the clamp side as well, so that the vibration-isolating layer is situated between two more rigid layers and is attached to each of them. In this case, the elastic layer then forms vibration isolation between the said two more rigid parts. The more rigid layers are preferably flexible to such an extent that the vibration isolation member may originally be in the form of a flat strip which can be bent into a ring.

In an embodiment which is advantageous in practice, the body of the vibration isolation member comprises an outer layer on the clamp side, which outer layer is more rigid than the layer of elastic material and is attached to the layer of elastic material. The elastic layer in question could also be directly attached to the more rigid clamp body of the pipe clamp. This can be effected as early as during production of the pipe clamp.

In an embodiment in which the vibration isolation member is a separate component which is subsequently fitted into a pipe clamp, it is also preferable if the vibration isolation member is provided with attachment means for attaching the outer circumference of the vibration isolation member to the pipe clamp. The attachment means may be in a wide variety of forms and may, for example, form a click-fit connection or an adhesive bond. By way of example, the vibration isolation member could be provided with self-adhesive tape on the outer circumference, by means of which a fitter sticks the vibration isolation member into a pipe clamp after a protective layer has been removed.

In an embodiment which is advantageous in practice, the body of the vibration isolation member is a flexible, originally flat strip which can be laid in the pipe clamp or around the pipe.

In another practical embodiment, the body of the vibration isolation member is annular with at least one break in order to enable the vibration isolation member to be arranged around the pipe. Preferably, the load-distributing layer is provided, at each break, with coupling means for coupling the adjacent ends of the load-distributing layer, so that the load-distributing layer can be formed into a closed ring. The coupling means may be of any suitable design, for example may form a hook coupling or other click-fit connection or, for example, may be designed with adhesive tape.

The member according to the invention which allows vibration isolation can be produced as a separate component or as an integral part of a pipe clamp assembly.

Further advantageous embodiments of the vibration isolation member and the pipe clamp assembly according to the invention are described in the claims and in the following description with reference to the drawing, in which:
Fig. 1 shows a first exemplary embodiment of the pipe clamp assembly according to the invention,
Fig. 2 shows a second exemplary embodiment of the pipe clamp assembly according to the invention,
Fig. 3 shows a third exemplary embodiment of the pipe clamp assembly according to the invention, and
Fig. 4 shows a fourth exemplary embodiment of the pipe clamp assembly according to the invention.

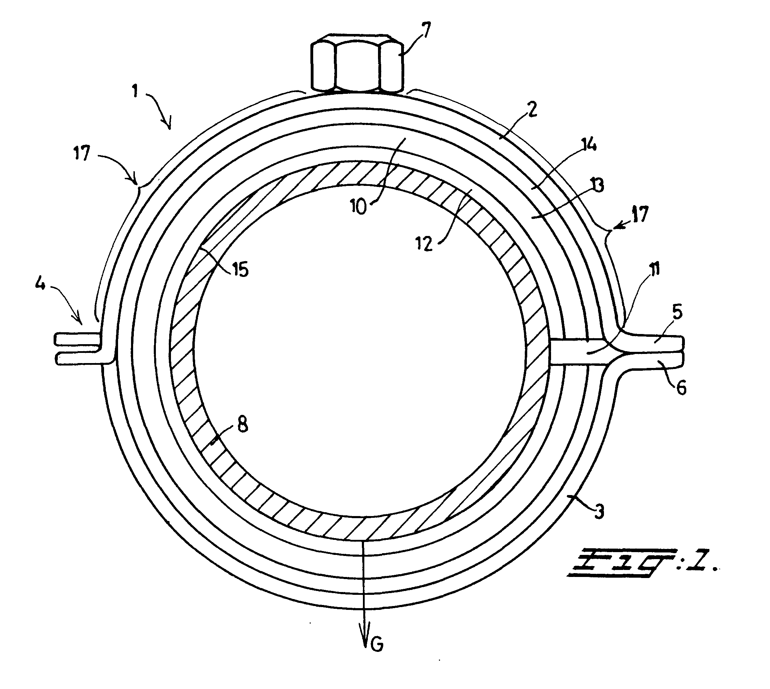

Figures 1-4, by way of example, each show the same pipe clamp 1 provided with different designs of the vibration isolation member.

The pipe clamp 1 has a clamp body which is assembled from two metal clamp halves 2, 3. The clamp halves 2, 3 each form approximately half of a cylindrical ring and are hingedly attached to one another on one side via a hinge coupling 4. On the other side, the clamp halves 2, 3 can be coupled via coupling means (not shown in more detail). By way of example, there is a tensioning bolt, by means of which the outwardly bent flanges 5, 6 of the clamp halves 2, 3 can be pulled together.

The clamp half 2 is provided with a nut 7, by means of which the pipe clamp 1, via a threaded rod or the like, can be attached to a support, for example a wall or a ceiling of a building. The pipe clamp body may also be provided with a different type of attachment member in order to secure the pipe clamp body to a support.

It will be clear that the pipe clamp 1 shown here is only an example and in no way limits the inventive idea to be explained below. For example, instead of the hinge coupling the pipe clamp could also be provided with a coupling with a tensioning bolt or the clamp body could have only one break and could be flexible to such an extent that the pipe can be placed into the clamp. Furthermore, it will be clear that the pipe clamp body could also be produced from plastics material and could also be of a completely different design from that shown here.

A pipe 8 can be seen in Figures 1-4. Vibrations often occur in this pipe 8, for example caused by a pump to which the pipe 8 is connected. These vibrations can be observed as small radial and/or axial movements of the pipe. To reduce or eliminate the transmission of the said vibrations from the pipe 8 to the support, there is in each case a vibration isolation member according to the invention between the pipe 8 and the pipe clamp body 2, 3.

The vibration isolation member 10 shown in Figure 1 is in the form of a ring with a single break 11 at the same location as the break in the pipe clamp body, so that the pipe 8 can be introduced into the pipe clamp 1 provided with the vibration isolation member 10 from the side. The structure of the vibration isolation member 10 in this case has a plurality of, in this case three, concentric layers 12, 13 and 14. In this arrangement, the outer layer 14 bears against the inner circumference of the pipe clamp body 2, 3, and the internal circumference of the innermost layer 12 forms an internal surface 15 which delimits an opening in which the pipe 8 lies.

The middle layer 13 can be resiliently compressed in an easy manner and so that the volume of material is reduced. In this example, the layer 13 consists of elastic foam material, for example of a suitable foamed plastic, such as foamed polyurethane. The foam material has, for example, a closed-cell structure, but within the scope of the inventive idea it is also conceivable to use an open-cell foam material. The elastic material used in the layer 13 may also be a (rubber) material with a porous structure.

The innermost layer 12 is a load-distributing layer. This layer 12 is made of a more rigid material than the vibration-isolating layer 13 and is attached to the layer 13. The layer 12, as is preferable, covers the entire surface of the layer 13 which faces towards the pipe, and the attachment also preferably takes place over the entire contact surface between the layers 12 and 13.

By way of example, the layer 12 is made from a solid plastics material which is attached to the material of the layer 13.

The load-distributing layer 12 is used to distribute the mechanical loads and vibrations exerted by the pipe 8 over the material in the layer 13.

The outer layer 14 extends around the outer circumference of the layer 13 and is made from a more rigid material than the layer 13, for example from plastics or metal. The outer layer 14 is also attached to the layer 13. The layer 14 preferably covers the entire outwardly facing side of the layer 12 and the attachment is produced over the entire contact surface.

The load-distributing layer 12 ensures that static and dynamic mechanical loads, in particular vibrations, which are exerted on the vibration isolator 10 by the pipe 8 are distributed over a larger part of the layer 13, as seen in the circumferential direction of the pipe 8, than if the load-distributing layer 12 were absent and the pipe 8 were to bear directly against the layer 13.

For example, assume that the clamp 1 is suspended from a ceiling and therefore the weight G of the pipe 8 is acting on the vibration isolator 10. Without the layer 12, only that part of the layer 13 which is situated beneath the pipe 8 in the vertical direction would be subjected to the load from the weight of the pipe 8. However, the load-distributing layer 12 transmits part of this load to those parts of the layer 13 which are situated above the largest horizontal cross section of the pipe 8, indicated in Figure 1 by 17. The material in these sections 17 is not subjected to compressive load, as is the case for the material in the layer 13 beneath the pipe 8, but rather to a tensile load.

Also in the event of vibrations in the pipe 8, the layer 12 ensures that the layer 13 is exposed to the small movements associated with the vibrations over its entire inner circumference. In that case, the pipe 8 together with the layer 13 lying around it forms a mass spring system which reduces the transmission of vibrations from the pipe 8 to the pipe clamp body 2, 3. In this case, the layer 13 absorbs not only radial components of the vibrations in the pipe 8 but also axial components. If appropriate, pipe 8 is also fixed (clamped) in the axial direction to the load-distributing layer 12.

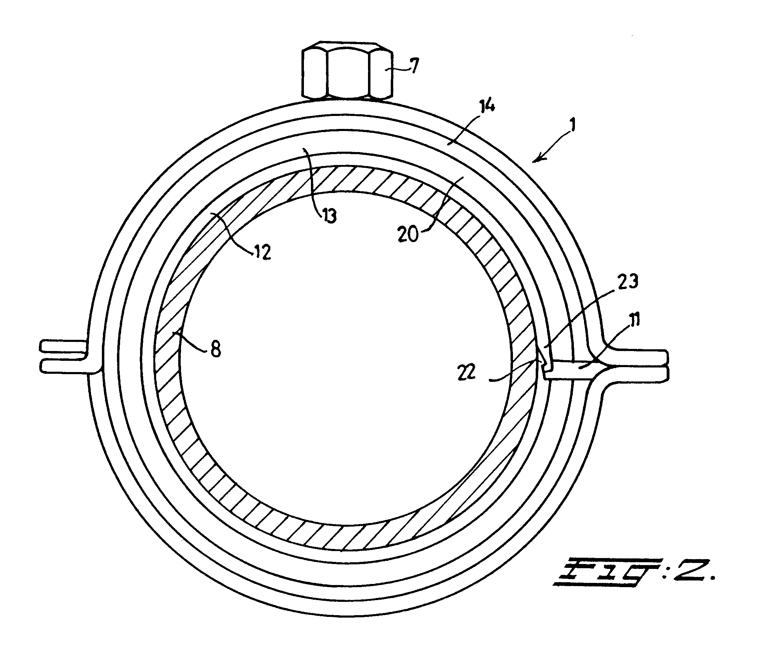

Figure 2 shows a vibration isolator 20 of substantially the same structure as that discussed with reference to Figure 1, with the break 11 and the layers 12, 13 and 14. However, the difference is that in this case force-transmitting coupling means are provided, which connect the ends of the load-distributing layer 12 to one another at the break 11. In this example, the coupling means are designed as a hook coupling with hook parts 22, 23 which engage in one another when the pipe clamp is closed. This coupling of the load-distributing layer 12 at the break 11 leads to a continuous ring being formed around the pipe 8 by the load-distributing layer 12. As a result, and because the layer 12 is attached to the layer 13, a vibration in the pipe 8 leads to compression of the layer 13 on one side and to stretching of the layer 13 on the opposite side. In this way, the material of the layer 13 is fully utilized for absorbing the vibration.

It will be clear that it is preferable for the coupling means associated with the load-distributing layer 12 to be designed in such a way that they automatically effect coupling when the clamp is closed. However, it is also conceivable for the coupling to be brought about before the clamp 1 is closed. It is also conceivable for the vibration isolator 20 to be arranged around the pipe 8 before the pipe 8 together with the vibration isolator 20 is placed in the pipe clamp 1.

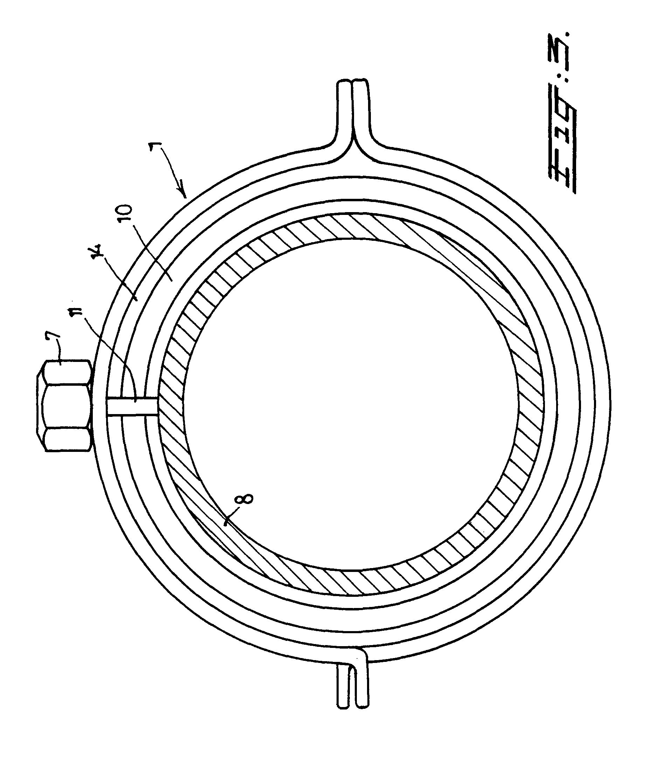

Figure 3 shows the same vibration isolator 10 as in Figure 1, the difference being that the location of the break 11 is in this case in the vicinity of the nut 7. This arrangement is advantageous, for example, if the clamp 1 is hanging from a support via the nut 7. In this case, it is conceivable for the isolator 10 to be secured around the pipe 8 first and then to be placed into the clamp 1. If appropriate, the ends of the outer layer 14 are coupled at the break 11, for example by tape or other coupling means. If appropriate, the vibration isolator can be fixed to the clamp body, for example at one location.

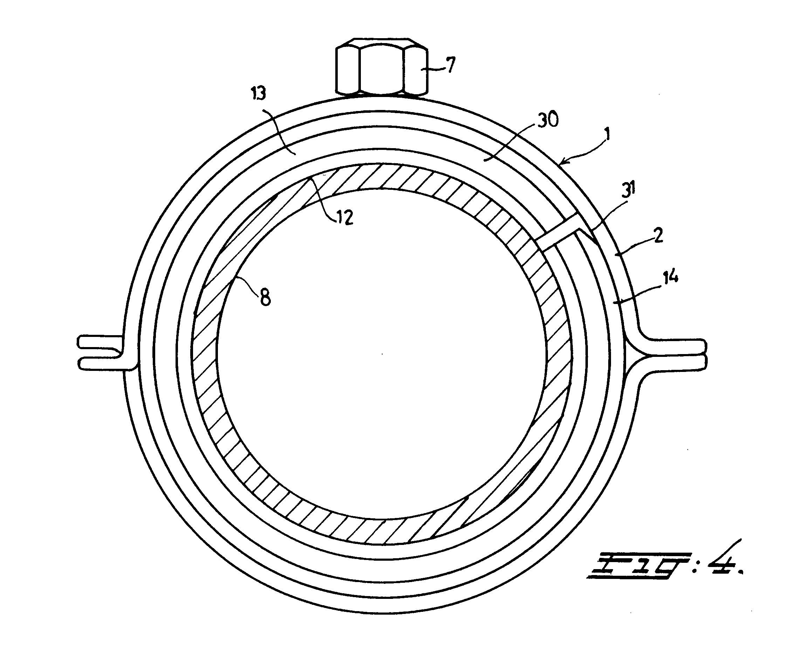

Figure 4 shows a vibration isolator 30 which in terms of its structure to a large extent corresponds to the isolator 10. The difference is that the outer layer 14 is provided with a bevel 31, so that when the clamp 1 is closed the isolator 30 slides between the pipe 8 and the clamp half 2.

It will be clear that the function of the outer layer 14 could also be realized by means of the pipe clamp body. In an advantageous embodiment, the vibration isolator itself would then only comprise the layer 13 with a closed-cell structure and the load-distributing layer 12 which is attached to or embedded in it, in which case the outer circumference of the foam layer is then directly connected in functional terms to the more rigid clamp body.

Particularly in the embodiments in which the load-distributing layer does not form a continuous ring, it is advantageous if the position of the vibration isolation member with respect to the pipe clamp body is adjustable.

The vibration isolation member can be produced by means of coinjection or coextrusion of suitable (plastics) materials, for example foamed elastomeric rubber or another plastics material.

In a particular variant, the load-distributing layer could be made from a hard plastics material, for example a foam material with a closed-cell structure.

In a variant, the load-distributing layer and/or the outer layer may be formed by melting the elastic plastics material on one or both sides and then allowing it to solidify again, so that on that/those side(s) the cell structure or porosity is completely or partially lost and (a) solidified layer(s) islare formed with a greater rigidity than the remainder.

In another variant, the pipe clamp body may be made from plastics material, for example with two clamp halves which can execute a hinged movement with respect to a base which can be secured to a support and are coupled to one another via a hook connection when the clamp is closed. In this case, the elastic (foam) layer may be formed on the clamp halves and may be coated on the inside with the load-distributing layer attached thereto. As a result, the vibration isolation member then forms an integral unit with the plastic pipe clamp body.

## Claims

1. Vibration isolation member (10) to be arranged between a pipe (8) and a pipe clamp (2, 3), for securing the pipe to a support, which vibration isolation member (10) has a body with a pipe side, which is to face towards the pipe, and a pipe-clamp side, which is to face towards the pipe clamp, which body is designed to extend around the pipe, the body of the vibration isolation member comprising a layer of elastic material (13), which layer (13) reduces the transmission of vibration from the pipe to the pipe clamp, **characterized in that** on the pipe side the body of the vibration isolation member comprises a load-distributing layer (12) for distributing mechanical loads and vibrations which are exerted by the pipe (8) over the layer of elastic material (13), which load-distributing layer (12) is more rigid than the layer of elastic material (13) and is attached to the layer of elastic material (13).

2. Vibration isolation member according to claim 1, in which the body of the vibration isolation member, on the clamp side, comprises an outer layer (14), which outer layer (14) is more rigid than the layer of elastic material (13) and is attached to the layer of elastic material (13).

3. Vibration isolation member according to claim 1 or 2, which is provided with attachment means for attaching the outer circumference of the vibration isolation member to the pipe clamp.

4. Vibration isolation member according to one or more of the preceding claims, in which the body of the vibration isolation member is a flexible strip which can be laid around the pipe.

5. Vibration isolation member according to one or more of claims 1-3, in which the body of the vibration isolation member is a ring which fits around the pipe.

6. Vibration isolation member according to one or more of claims 1-3, in which the body of the vibration isolation member is a ring provided with one or more breaks, so that the ring can be opened and can be positioned around the pipe.

7. Vibration isolation member according to claim 6, in which the load-distributing layer (12) is provided, at each break, with coupling means (22, 23) for coupling the adjacent ends of the load-distributing layer, so that the load-distributing layer can be formed into a continuous ring.

8. Vibration isolation member according to one or more of the preceding claims, which is produced by means of coinjection or coextrusion of suitable materials.

9. Vibration isolation member according to one or more of the preceding claims, in which the load-distributing layer is made from closed-cell foam material with a significantly smaller pore size than the vibration-isolating layer of foam material lying outside it or a layer of foam material which has been melted and solidified.

10. Pipe clamp assembly for securing a pipe to a support, comprising a pipe clamp (2, 3), a vibration isolation member (10) according to one or more of the preceding claims being accommodated in the pipe clamp.

11. Pipe clamp assembly according to claim 10, in which the layer of elastic material of the vibration isolation member is directly attached to the pipe clamp.

12. Pipe clamp assembly according to claim 10, in which the vibration isolation member comprises a rigid outer layer which is attached to the pipe clamp at at least one location.

13. Pipe clamp assembly according to claim 10, in which the position of the vibration isolation member with respect to the pipe clamp is adjustable.

14. Pipe clamp assembly according to one or more of the preceding claims 10-13, in which the pipe clamp is made from metal.

15. Pipe clamp assembly according to one or more of the preceding claims 10-13, in which the pipe clamp is made from plastics material.

16. Pipe clamp assembly according to one or more of the preceding claims 10-15, in which the pipe clamp has a substantially annular clamp body which is split at at least one location, coupling means being provided at each break for coupling the ends of the clamp body.

17. A combination of a pipe clamp and a vibration isolation member according to one or more of the preceding claims.
